Europäisches Patentamt

European Patent Office

Office européen des brevets

(19)

(11) Veröffentlichungsnummer : **0 179 948**
**B1**

(12) **EUROPÄISCHE PATENTSCHRIFT**

(45) Veröffentlichungstag der Patentschrift :
25.05.88

(21) Anmeldenummer : 84113205.3

(22) Anmeldetag : 02.11.84

(51) Int. Cl.⁴ : **H 04 N   9/64**, H 04 N   9/70

(54) Farbfernsehempfänger mit mindestens einer integrierten Schaltung zur Verarbeitung des digitalisierten Farb-Bild-Austast-Synchron-Signalgemisches (FBAS-Signal).

(43) Veröffentlichungstag der Anmeldung :
07.05.86 Patentblatt 86/19

(45) Bekanntmachung des Hinweises auf die Patenterteilung : 25.05.88 Patentblatt 88/21

(84) Benannte Vertragsstaaten :
DE FR NL

(56) Entgegenhaltungen :
US-A- 4 419 688
US-A- 4 463 371

(73) Patentinhaber : Deutsche ITT Industries GmbH
Hans-Bunte-Strasse 19 Postfach 840
D-7800 Freiburg (DE)

(72) Erfinder : Freyberger, Laurin Clemens
Schönenbergstrasse 1
D-7833 Endingen a.K. (DE)

(74) Vertreter : Morstadt, Volker, Dipl.-Ing.
c/o Deutsche ITT Industries GmbH Patent/Lizenzab-
teilung Postfach 840 Hans-Bunte-Strasse 19
D-7800 Freiburg/Brsg. (DE)

## Beschreibung

Die Erfindung bezieht sich auf einen Farbfernsehempfänger mit mindestens einer integrierten Schaltung zur Verarbeitung des mittels eines Taktsignals digitalisierten Farb-Bild-Austast-Synchron-Signalgemisches (FBAS-Signal) ; dabei ist das digitale Chrominanzsignal mit einer Phasenregelschleife (PLL-Schleife) auf die Farbhilfsträgerfrequenz eingerastet ; ein in der Frequenz und Phase steuerbarer Hilfsträgeroszillator ist Teil der PLL-Schleife und erzeugt das Taktsignal für die digitale Verarbeitung ; ein Farbabschalter unterbindet die Farbwiedergabe und ein Abgleichschalter öffnet die PLL-Schleife für den Frequenzabgleich ; die Abgleichdaten sind über einen Datenbus zugeführt und in einem Frequenzregister gespeichert ; und eine Burstamplituden-Regelschaltung regelt die Burstamplitude auf den Wert einer Burstreferenz und schaltet bei nichterreichtem Regelziel über den Farbabschalter die Farbe ab, vgl. den Oberbegriff des Anspruchs 1.

Ein derartiger Farbfernsehempfänger ist im Datenbuch der Fa. Intermetall Semiconductors ITT, « Digit 2000 VLSI Digital TV System », Edition 1984/5, Seiten 76 bis 80 beschrieben. Bei dieser Anordnung kann die PLL-Schleife für Abgleichzwecke geöffnet werden, z. B. im Prüffeld, indem über den Datenbus von außen her die entsprechenden Steuer- und Abgleichdaten eingegeben werden. Im Betrieb selbst bleibt die PLL-Schleife dauernd geschlossen. Beim Empfang von normgerechten Farbfernsehsignalen rastet die PLL-Schleife auf die im Burstsignal enthaltene Farbhilfsträgerfrequenz ein, die Schwingfrequenz des Farbhilfsträgeroszillators beträgt dabei das Vierfache der Farbhilfsträgerfrequenz. Bei nichtnormgerechten Farbfernsehsignalen, insbesondere wenn kein oder nur ein sehr kleines Burstsignal vorhanden ist, wie z. B. bei an den Fernsehempfänger angeschlossenen Videospielen oder Heimrechnern, aber auch beim Empfang reiner Schwarz-Weiß-Fernsehsignale ohne Burst, versucht die Burstamplituden-Regelschaltung die im FBAS-Signal enthaltenen Rausch- oder sonstigen Schwingungsanteile soweit zu verstärken, daß die PLL-Schleife auf sie einrasten kann. Die derart eingerastete PLL-Schleife läuft dadurch aus ihrer Sollfrequenz heraus und kann je nach einer im FBAS-Signal enthaltenen Störsignalfrequenz bis an die Grenze des Fangbereichs verstimmt werden.

Wird der Farbfernsehempfänger danach auf einen Kanal mit einem normgerechten Farbfernsehsignal umgeschaltet, nimmt die PLL-Schleife in manchen Fällen den phasenverriegelten Betrieb nicht wieder auf, besonders wenn die Abgleichfrequenz der offenen PLL-Schleife durch Alterung, Temperatur oder ungünstigen Abgleich von der Sollfrequenz abweicht und somit einen Teil des Fang- und Haltebereiches der PLL-Schleife beansprucht, den nutzbaren Regelbereich der PLL-Schleifenfrequenz dadurch unsymmetrisch macht und einseitig einengt. Dieses Verhalten äußert sich darin, daß der Farbfernsehempfänger die Farbwiedergabe ganz unterbindet oder diese nicht sofort, sondern erst nach einer geraumen Zeit stabil ist.

Die Aufgabe der in den Ansprüchen gekennzeichneten Erfindung besteht daher darin, einen Farbfernsehempfänger anzugeben, der beim Umschalten von einem nichtnormgerechten auf ein normgerechtes Farbfernsehsignal sofort eine stabile Farbwiedergabe ermöglicht. Zur Lösung dieser Problemstellung ist die PLL-Schleife für das Farbhilfsträgersignal so ausgebildet, daß bei nichtempfangswürdigen Burstsignalen die PLL-Schleife geöffnet ist und daß dabei der Farbhilfsträgeroszillator auf seiner Abgleichfrequenz schwingt.

Ein durch die Erfindung erreichter Vorteil ist darin zu sehen, daß für das Einrasten der PLL-Schleife, unabhängig von der Frequenz der Störsignale, nur noch die Differenz zwischen der Abgleichfrequenz und der Sollfrequenz zu überwinden ist. Ein anderer Vorteil ist die Verwendung eines vorhandenen Amplitudenüberwachungssignals zum Öffnen der PLL-Schleife. Zusätzliche Indikatorsignale, die den Verkopplungszustand der PLL-Schleife gegenüber dem Farbhilfsträgersignal anzeigen, insbesondere bei Mehrnormengeräten, sind über zusätzliche Verknüpfungsschaltungen leicht als Steuersignale für die PLL-Schleifen-Öffnung einbeziehbar. Schließlich ist es vorteilhaft, daß über den Datenbus die Burstreferenz verändert werden kann und damit die PLL-Schleifenöffnung im Vergleich zur Burstamplitude ebenfalls veränderbar ist.

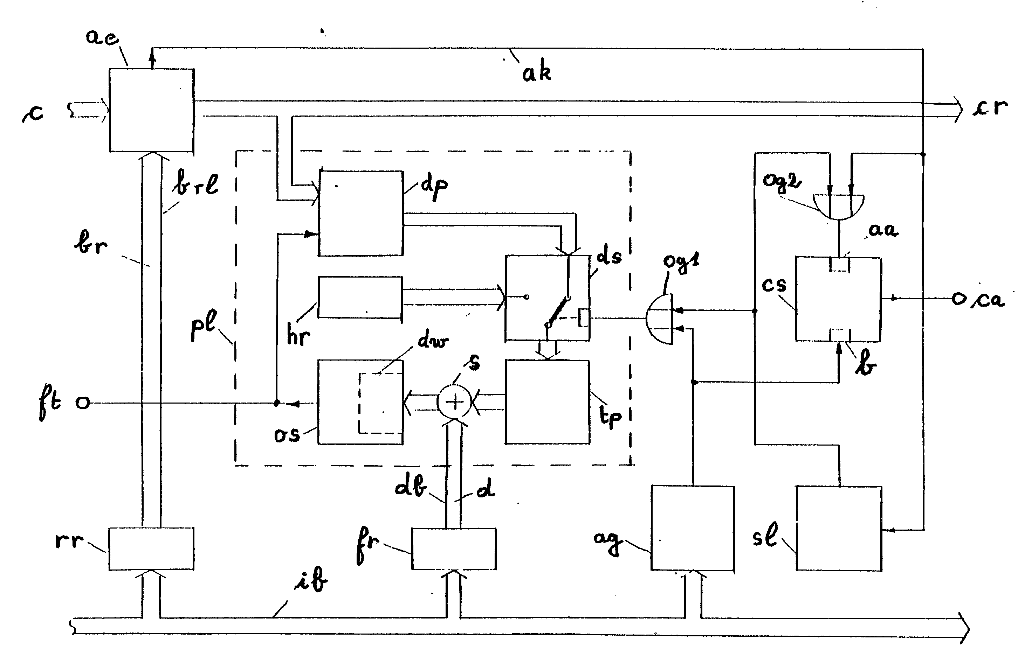

Die Erfindung wird nun anhand der Figur der Zeichnung näher erläutert, die als ein Ausführungsbeispiel das Blockschaltbild einer Phasenregelschleife mit Farbabschalter entsprechend der Erfindung zeigt.

In der Figur ist eine PLL-Schleife für ein digitalisiertes Chrominanzsignal dargestellt, welche in ihrem grundsätzlichen Aufbau der in der oben genannten Literaturstelle beschriebenen entspricht und durch die erfindungswesentlichen Teilschaltungen ergänzt ist. Das digitalsierte Chrominanzsignal c ist der Burstamplituden-Regelschaltung ac zugeführt. Die Burstamplituden-Regelschaltung ac ist über die erste Datenleitung brl mit dem Referenzregister rr derart verbunden, daß dessen Daten als Burstreferenz br in die Burstamplituden-Regelschaltung ac gelangen. Das an deren Ausgang vorhandene verstärkte Chrominanzsignal cr ist dem Phasenvergleicher dp und weiteren hier nicht näher interessierenden Schaltungsstufen des Farbfernsehempfängers zugeführt. Der Datenumschalter ds, dessen Steuereingang mit dem Ausgang einer ersten ODER-Schaltung og1 verbunden ist, ist mit seinem ersten Dateneingang am Ausgang des Phasenvergleichers dp und mit seinem zweiten Dateneingang am Hilfsregister hr angeschlossen.

Der Ausgang des Datenumschalters ds liegt am Eingang des Tiefpaßfilters tp, dessen Ausgang der Datensummierstufe s zugeführt ist. Dieser sind auch über die zweite Datenleitung db Daten (Datenwort d) aus dem Frequenzregister fr zugeführt, und ihr Ausgang ist mit dem Digital-Analog-Wandler dw des Farbhilfsträgeroszillators os verbunden. Dessen Ausgang liefert den Systemtakt ft, der zum einen der Taktversorgung des digitalen Farbfernsehempfängers dient und zum anderen an einem weiteren Eingang des Phasenvergleichers dp liegt. Der Ausgang des Abgleichschalters ag ist mit einem der beiden Eingänge der ersten ODER-Schaltung og1 und mit dem « Farbe-Ein »-Eingang b des Farbabschalters cs verbunden, dessen Ausgangssignal das Farbabschaltsignal ca ist.

Der « Farbe-Aus »-Eingang aa des Farbabschalters cs ist mit dem Ausgang der zweiten ODER-Schaltung og2 verbunden. Der Ausgang des Schleifenschalters sl ist einmal auf den zweiten Eingang der ersten ODER-Schaltung og1 und auf einen der beiden Eingänge der zweiten ODER-Schaltung og2 geschaltet. Das von der Burstamplituden-Regelstufe ac abgegebene Amplitudenüberwachungssignal ak ist dem zweiten Eingang der zweiten ODER-Schaltung og2 und dem Eingang des Schleifenschalters s1 zugeführt. Der Datenbus ib ist mit den Dateneingängen des Referenzregisters rr, des Frequenzregisters fr und des Abgleichschalters ag verbunden.

Bei dem beschriebenen Ausführungsbeispiel wird das Chrominanzsignal c synchron zum Systemtakt ft in einer vorgeschalteten, hier nicht beschriebenen Analog-Digital-Wandlerstufe digitalisiert. Dieses Signal gelangt in die Burstamplituden-Regelstufe ac, in der die Burstamplitude des FBAS-Signals mit der in der Regel größeren Burstreferenz br verglichen und bei Nichtgleichheit solange nachgeregelt wird, bis die Burstamplitude der Burstreferenz br entspricht. Das vorverstärkte Chrominanzsignal cr gelangt in den Phasenvergleicher dp. In ihm vergleicht eine Auswerteschaltung die mit dem Systemtakt ft digitalisierten momentanen Burstsignalspannungen untereinander. Die dadurch ermittelte Phasendifferenz zwischen dem Systemtakt ft und dem Burstsignal gelangt als Phasendifferenzsignal an den Datenumschalter ds. Das daran angeschlossene Tiefpaßfilter tp, dessen Frequenzgang für die PLL-Schleife pl optimiert ist, gibt sein Ausgangssignal an die Datensummierstufe s. Dort wird das zum Frequenzabgleich im Frequenzregister fr gespeicherte Datenwort d hinzuaddiert und dem Farbhilfsträgeroszillator os zugeführt. Dieser wandelt die Daten über den Digital-Analog-Wandler dw in eine analoge Ziehspannung zur Frequenznachführung um. Das Ausgangssignal des Farbhilfsträgersozillators os, der Systemtakt ft, ist den an der FBAS-Signalverarbeitung beteiligten Digitalschaltungen, also auch dem Phasenvergleicher dp, zugeführt. Damit ist die PLL-Schleife pl geschlossen.

Überschreitet in der Burstamplituden-Regelschaltung ac die erforderliche Regelverstärkung einen Grenzwert, dann gibt sie das Amplitudenüberwachungssignal ak ab, das dem Farbabschalter cs und dem « Farbe-Aus »-Eingang des Schleifenschalters sl zugeführt ist. Damit ist die Farbwiedergabe über das Farbabschaltsignal ca unterbunden und die PLL-Schleife pl über den Datenumschalter ds geöffnet, indem dieser statt des Phasendifferenzsignals den Inhalt des Hilfsregisters hr, das der Phasendifferenz mit dem Wert null entspricht, dem Tiefpaßfilter dp zuleitet. Der Farbhilfsträgeroszillator os bekommt so als Steuersignal für die Schwingfrequenz als Summensignal allein das Datenwort db aus dem Frequenzregister fr zugeführt und schwingt so auf der Abgleichfrequenz.

Zum Frequenzabgleich der PLL-Schleife pl wird über den Datenbus ib der Abgleichschalter ag angesteuert, der den Datenumschalter ds öffnet und ein Steuersignal an den « Farbe-Ein »-Eingang b des Farbabschalters cs gibt. Über den Datenbus ib kann nun der Inhalt (Datenwort d) des Hilfsregisters hr verändert werden. Beim Empfang eines FBAS-Signals, das ein Farbtestbild enthält, kann über die eingeschaltete Farbwiedergabe die Abgleichfrequenz z. B. im Servicefall so eingestellt werden, daß sich im Testbild möglichst geringe Schwebungen bzw. Farbdurchläufe ergeben.

Die Schaltung nach der Erfindung eignet sich aufgrund der Tatsache, daß sie mit ausschließlich digitalen Teilschaltungen arbeitet, insbesondere zur Integrierung mittels Isolierschicht-Feldeffekttransistoren, also zur Integrierung in der sogenannten MOS-Technik. Es können jedoch auch selbstverständlich bipolare Integrierungstechniken angewendet werden, die sich besonders für Digitalschaltungen eignen.

**Patentansprüche**

1. Farbfernsehempfänger mit mindestens einer integrierten Schaltung zur Verarbeitung des mittels eines Taktsignals digitalisierten Farb-Bild-Austast-Synchron-Signalgemisches (FBAS-Signal)

mit einer das digitale Chrominanzsignal (c) liefernden Stufe,

mit einer Phasenregelschleife (PLL-Schleife) (pl), die beim Empfang von Farbfernsehsignalen auf die im Burstsignal enthaltene Farbhilfsträgerfrequenz (fh) eingerastet ist,

mit einem in Frequenz und Phase steuerbaren Farbhilfsträgersozillator (os), der Teil der PLL-Schleife (pl) im ist, phasenverriegelten Betrieb auf einem ganzzahligen Vielfachen der Farbhilfsträgerfrequenz schwingt und auch das Taktsignal als Systemtakt (ft) für die digitale Verarbeitung erzeugt,

mit einem Farbabschalter (cs), der die Farbwiedergabe mittels eines Farbabschaltsignals (ca) unterbindet,

mit einem Abgleichschalter (ag), der die PLL-Schleife (pl) mittels eines Datenumschalters (ds) öffnet, die Farbwiedergabe dabei unabhängig vom Burstsignal einschaltet und von einem Datenbus (ib) gesteuert ist,

mit einem Speicher, dem Frequenzregister (fr), dessen über den Datenbus (ib) veränderbarer Inhalt (Datenwort d) dem Farbhilfsträgersozillator (os) zugeführt ist und ihn auf eine in seinem Ziehbereich liegende frequenz einstellt, mit einer Burstamplituden-Regelschaltung (ac), die mit einem Referenzregister (rr) verbunden ist, in dem eine über den Datenbus (ib) veränderbare Burstreferenz (br) gespeichert ist, wobei die Burstamplituden-Regelschaltung (ac) die Burstamplitude auf den Wert der Burstreferenz (br) regelt und oberhalb einer festgelegten Regelverstärkung ein Amplitudenüberwachungssignal (ak) als Steuersignal an den Farbabschalter (cs) abgibt, dadurch gekennzeichnet, daß

das Amplitudenüberwachungssignal (ak) als Schaltsignal einem Schleifenschalter (s1) zugeführt ist, der

die PLL-Schleife (pl) über den Datenumschalter (ds) öffnet und den Farbhilfsträgeroszillator (os) vom phasenverriegelten Betrieb in den unverriegelten Betrieb mit der Abgleichfrequenz umschaltet,

die Farbwiedergabe mittels eines Steuersignals auf den « Farbe-Aus »-Eingang (aa) des Farbabschalters (cs) unterbindet und

der bei vorhandenem und gegenüber der Burstreferenz (br) ausreichendem Burstsignal die PLL-Schleife (pl) in den phasenverriegelten Betrieb zurückschaltet und die Farbwiedergabe freigibt.

2. Farbfernsehempfänger nach Anspruch 1, dadurch gekennzeichnet, daß die Abgleichfrequenz ein ganzzahliges Vielfaches der Farbhilfsträgerfrequenz (fh) ist und mittig innerhalb des Haltebereichs der PLL-Schleife (pl) liegt.


### Claims

1. Color-television receiver with at least one integrated circuit for processing the composite color signal digitized by means of a clock signal, comprising

a stage delivering the digital chrominance signal (c),

a phase-locked loop (pl) which, during reception of color-television signals, is locked to the chrominance-subcarrier frequency (fh) contained in the burst signal,

a frequency- and phase-controllable chrominance-subcarrier oscillator (os) which forms part of the phase-locked loop (pl), oscillates at an integral multiple of the chrominance-subcarrier frequency in the phase-locked mode, and generates the clock signal serving as the system clock (ft) for the digital processing,

a color killer (cs) which inhibits color reproduction by means of a color kill signal (ca),

an alignment switch (ag) which opens the phaselocked loop (pl) via a data switch (ds), simultaneously enables color reproduction independent of the burst signal, and is controlled over a data bus (ib),

a frequency register (fr) whose contents (data word d), which can be altered over the data bus (ib), are fed to the chrominance-subcarrier oscillator (os) and adjust it to a frequency lying in its lock-in range, and

a burst amplitude control circuit (ac) connected to a reference register (rr) which holds a burst reference alterable over the data bus (ib), with the burst amplitude control circuit (ac) regulating the burst amplitude at the value of the burst reference (br) and, when this value exceeds a pre-determined loop gain, provides an amplitude control signal (ak) as a control signal to the color killer (cs),

characterized in that

the amplitude control signal (ak) is applied as a switching signal to a loop switch (sl) which

opens the phase-locked loop (pl) via the data switch (ds) and switches the chrominance-subcarrier oscillator (os) from the phase-locked mode to the non-locked mode, in which the chrominance-subcarrier oscillator (os) oscillates at the alignment frequency,

inhibits color reproduction by causing a control signal to be applied to the « color off » input (aa) of the color killer (cs), and

in the presence of a burst signal of sufficient magnitude in comparison with the burst reference (br), switches the phase-locked loop (pl) back to the phase-locked mode and enables the color reproduction.

2. A color television receiver as claimed in claim 1, characterized in that the alignment frequency is an integral multiple of the chrominance-subcarrier frequency (fh) and lies at the center of the lock range of the phase-locked loop (pl).


### Revendications

1. Récepteur de télévision en couleur comportant au moins un circuit intégré pour traiter le signal complet en couleurs numérisé à l'aide d'un signal de synchronisation (signal complet en couleurs), comprenant un étage fournissant le signal de chrominance numérique (c), comprenant une boucle à verrouillage de phase (pl) qui, à la réception de signaux de télévision en couleur, se synchronise sur la sous-porteuse de couleur (fh) contenue dans le signal de salve, un oscillateur de sous-porteuse (os) pouvant être commandé en fréquence et en phase, faisant partie de la boucle à verrouillage de phase (pl), qui oscille sur un multiple entier de la fréquence de la sous-porteuse de couleur et produit également le signal de synchronisation sous la forme de l'horloge du système (ft) pour les traitements numériques, un circuit de suppression de la chaleur (cs) qui bloque la reproduction des couleurs à l'aide d'un signal de coupure de couleur (ca), comprenant un commutateur d'accord (ag) qui ouvre la boucle à verrouillage de phase (pl) à l'aide d'un commutateur de données (ds), qui commande la reproduction des couleurs indépendamment du signal de salve et qui est commandé par un bus de données (ib), une mémoire, le registre de fréquence (fr), dont le contenu modifiable (mot de données d) par l'intermédiaire du bus de données (ib) est envoyé à l'oscillateur de la sous-porteuse de couleur (os) et le règle sur une fréquence comprise dans la plage d'ajustage et un circuit de réglage de l'amplitude de salve (ac) qui est relié à un registre de référence (rr) dans lequel est mémorisée une référence de salve (br) qui peut être modifiée par l'intermédiaire du bus de données (ib), ce circuit de réglage de l'amplitude de salve (ac) réglant l'amplitude de la salve à la valeur de la référence de salve (br) et fournissant au-dessus d'une amplification variable donnée le signal de surveillance de l'amplitude (ak) qui est utilisé comme signal de commande par le circuit de suppression de la couleur (cs), caractérisé en ce que le signal de surveillance de l'amplitude (ak) est injecté comme signal de commande à un commutateur de boucle (sl) qui ouvre la boucle à verrouillage de phase (pl) par le commutateur de données (ds) et commute l'oscillateur de la sous-porteuse de couleur (os) du mode verrouillé en phase en mode non verrouillé à la fréquence d'accord, qui bloque la reproduction des couleurs à l'aide d'un signal de commande envoyé à l'entrée « Couleur arrêt » (aa) du circuit de suppression de la couleur (cs) et qui, en cas de présence d'un signal de salve suffisant par rapport à la référence de salve (br), replace la boucle à verrouillage de phase (pl) en mode verrouillé en phase et valide la reproduction des couleurs.

2. Récepteur de télévision en couleur selon la revendication 1, caractérisé en ce que la fréquence d'accord est un multiple entier de la fréquence de la sous-porteuse de couleur (fh) et qu'elle est centrée dans la plage de synchronisation de la boucle à verrouillage de phase (pl).